(19) Europäisches Patentamt
European Patent Office
Office européen des brevets

(11) **EP 1 592 155 A1**

(12) **EUROPEAN PATENT APPLICATION**

(43) Date of publication:
**02.11.2005 Bulletin 2005/44**

(51) Int Cl.⁷: **H04H 1/00**, H04B 1/16

(21) Application number: **05005800.7**

(22) Date of filing: **17.03.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventor: **Kwak, Kook Yeon**<br>**Dongan-gu Anyang-si Gyeonggi-do (KR)** |
| (30) Priority: **19.03.2004 KR 2004018884** | (74) Representative: **Rupprecht, Kay et al**<br>**Meissner, Bolte & PartnerGbR**<br>**Postfach 10 26 05**<br>**86016 Augsburg (DE)** |
| (71) Applicant: **LG ELECTRONICS INC.**<br>**Seoul (KR)** | |

(54) **Mobile broadcasting receiver with reduced power consumption by supplying power only in periods of the reception of relevant data**

(57)     An Eureka-147 mobile broadcasting receiver for reducing power consumption and a method thereof is provided. In the present invention, addresses of capacity units carrying service components of a target broadcasting service are determined based on information included in multiplex configuration information (MCI) of a fast information channel (FIC) in a transmitting frame. Based on the determined addresses of the capacity units, a transmitting order number of OFDM symbol carrying the determined addresses of the capacity units is calculated. After calculating, a time region of receiving a synchronization channel, the FIC, the calculated OFDM symbol and an OFDM symbol previously received than the calculated OFDM symbol is setup as a power-on region. Power consumption of the mobile broadcasting receiver is reduced by activating analog circuits such as a tuner and an ADC only in the power-on region.

## FIG. 8

### Description

This application claims the benefit of the Korean Application No. 10-2004-0018884 filed on March 19, 2004, which is hereby incorporated by reference.

### BACKGROUND OF THE INVENTION

#### Field of the Invention

The present invention relates to a mobile broadcasting receiver, and more particularly, to a Eureka-147 digital multimedia broadcasting (DMB) receiver for reducing power consumption and a method thereof.

#### Discussion of the Related Art

Recently, digital audio devices providing high quality sound, such as CD and DVD players, have been popular and accordingly, consumers have been increasingly demanding and requesting the provision of digital broadcasting, which requires high sound quality. Accordingly, in order to overcome the limitations in sound quality of the currently provided frequency modulation (FM) broadcasting, digital audio broadcasting (DAB) is being conducted in Europe, Canada, the United States of America, and many other countries. The provided amplitude modulation (AM) broadcasting or frequency modulation (FM) broadcasting, so as to provide excellent sound quality. The DAM system also provides excellent receiving capacity even while the user is in a mobile state and has the characteristics of transmitting digital data, such as images and short messages, at a high speed. Recently, diversified multimedia services including both audio and video broadcasting are being emphasized, such services are referred to as digital multimedia broadcasting (DMB). The DMB is a digital multimedia broadcasting technology providing CD quality audio service, data service or video service and guaranteeing high quality of receiving performance at a fixed location or in the mobile state.

Eureka-147 has been introduced for the DAB but the Eureka-147 has been used as fundamental technology of a ground wave DMB technology for providing a video service of a small sized moving picture by using 2MHz of a narrow frequency bandwidth. Eureka-147 system provides an expandable structure for transmitting multimedia data. That is, the Eureka-147 provides a packet mode or a stream mode for transmitting the multimedia data. Accordingly, multimedia data can be transmitted with minimum modification of a conventional ground wave DAB system in the Eureka-147 system.

In the Eureka-147 system, single broadcasting service may be includes a plural of service components. Also, a plurality of broadcasting services may be multiplexed and the multiplexed broadcasting services are transmitted through about 2MHz frequency bandwidth.

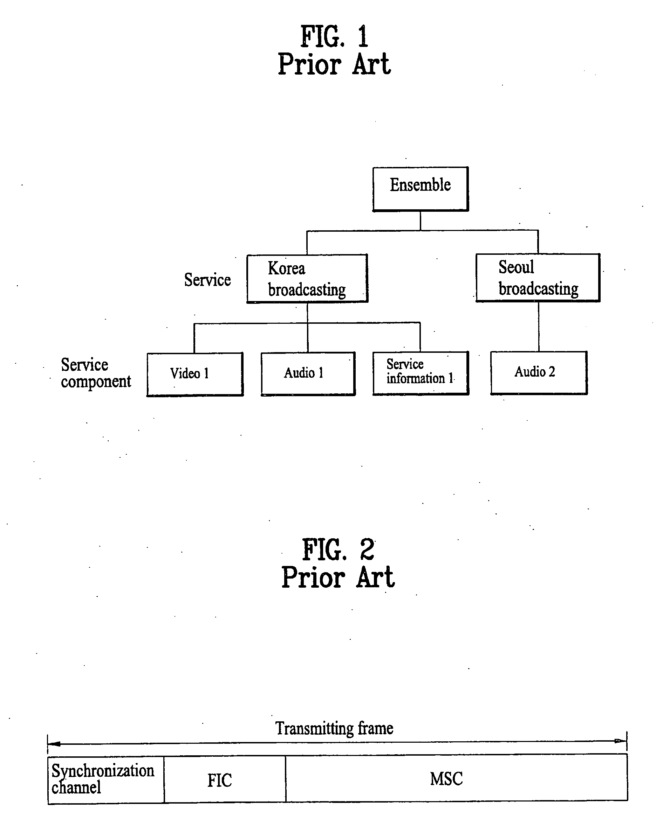

FIG. 1 shows broadcasting services provided based on the Eureka-147 system. As shown, single broadcasting service includes at least one or more of service components and an ensemble includes at least one or more of broadcasting services.

As shown in the FIG. 1, the service represents a broadcasting service provided from a broadcasting station and the service includes at least more than one of service components. The service components represent components of the broadcasting service such as video, audio, traffic information or broadcasting information. For example, a service of Korea broadcasting includes service components of video 1, audio 1 and service information 1. And, a service of Seoul broadcasting includes a service component of audio 2. The Korea broadcasting and the Seoul broadcasting forms an ensemble by being timely multiplexed. The ensemble is modulated by a predetermined method and the modulated ensemble is transmitted through single 2 MHz frequency bandwidth. The service components are mapped to sub channels in manner of 1:1.

In the Eureka-147, multiplex configuration information (MCI) is transmitted with transmitted data. The MCI is information for noticing a type of service and types of service components included in the service and locations of the service components in a frame of the transmitting data.

That is, in the Eureka-147 system, data is transmitted in a unit of a frame. That is, frames are repeatedly transmitted for transmitting the data. FIG. 2 shows a structure of a transmitting frame in the Eureka-147 system. As shown, the transmitting frame includes a synchronization channel, a fast information channel (FIC) and a main service channel (MSC).

The synchronization channel has a predetermined format for representing an initial frame. A null symbol and a phase reference symbol (PRS) are included in the synchronization channel. The PRS is included for a $\pi/4$-*DQPSK* modulation/demodulation.

The FIC is used for transmitting various information for receiving broadcasting services. The FIC includes the MCI, service information (SI), a fast information data channel (FIDC) and a conditional access (CA). A format of MCI in the FIC in the Euraka-147 is well known to those skilled in the art so detailed explanation is omitted. A DMB receiver recognizes a location of target service components in the MSC based on the MIC information. That is, the DMB receiver receives a desired broadcasting service by extracting the target service components among broadcasting contents included in the MSC and recovering the extracted target service components. Therefore, the MCI is major information for receiving the target broadcasting service in the DMB.

The MSC includes one or more of common interleaved frames (CIF) and is used for transmitting broadcasting services of video, audio and data.

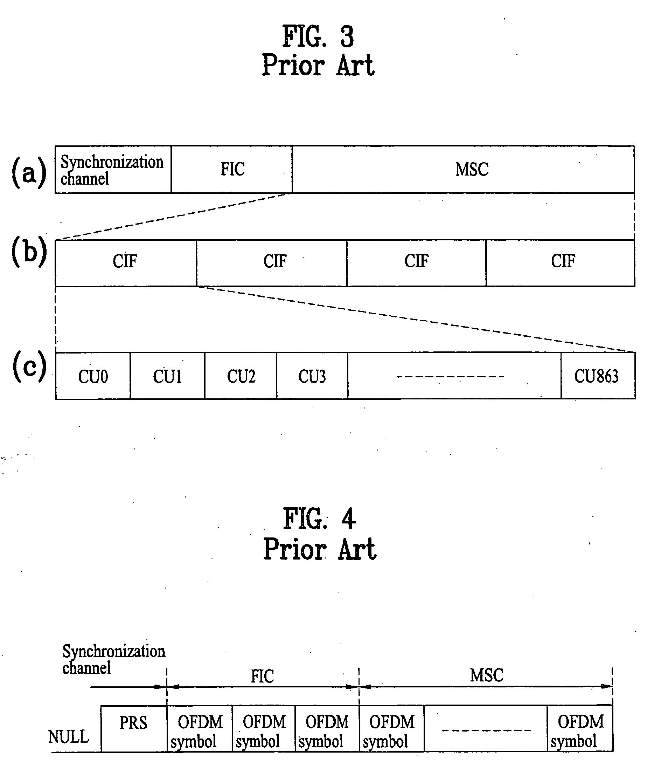

FIG. 3 is a diagram showing a frame structure of a MCS in a transmitting mode 1 which is standardized by Korea DMB standard. As shown in (a) of FIG. 3, the FIC includes four CIFs.

Each of CIFs includes 864 capacity units (CU). A unique address is assigned to each of CUs. For example, an address CU0 is assigned to a first CU of the CIF, an address CU1 is assigned to a second CU of the CIF, an address CU2 is assigned to third CU of the CIF and an address CU863 is assigned to the last CU of the CIF. A sub channel is constructed as integer times of the CU and is a basic unit of the MSC. If a location of CU for a target service component is accurately known, corresponding data can be accurately extracted.

A transmitting channel of the DMB broadcasting is a wireless mobile receiving channel. Amplitude of a receiving signal is timely varied and a Doppler spreading of the receiving signal spectrum is generated by a mobile receiver.

By considering channel environment of receiving and transmitting data, the Eureka-147 transmits data by using a differential coding method based on an orthogonal frequency division multiplexing (OFDM) method. The OFDM method is a widely known method for transmitting data. The OFDM method modulates the data to several narrow bands carriers and combines the modulated data for transmitting the data. A simultaneously transmitted group of signals is called as an OFDM symbol and the data are modulated/demodulated in a unit of the OFDM symbol in the OFDM method. The differential coding method decodes a phase difference between a narrow band carrier of previous symbol and a narrow band carrier of current symbol when data is coded with each narrow carrier of the OFDM. The differential coding method is also well known to those skilled in the art so detailed explanation is omitted.

The Eureka-147 arranges data to be suitable for the frame structure and converts the arranged data to OFDM symbols by gathering the arranged data in a unit of 3072 bits. And then, the Eureka-147 modulates the OFDM symbol to RF signal and transmits the RF signal.

FIG. 4 is a frame structure of a transmitting mode 1 after OFDM modulation. The synchronization channel includes a null region having a value of '0' and the PRS of single symbol setting a phase reference. The FIC includes three OFDM symbols and the MSC includes 72 OFDM symbols. The MSC includes 4 CIFs. That is, the CIF includes eighteen OFDM symbols.

In a transmitting side of the DMB, each of service components such as audio, video or data service is independently coded and interleaved based on a time region. Each of the interleaved service components is multiplexed and combined to the MSC. The multiplexed signal is included in the FIC which is control channel and interleaved in frequency regions with MCI and SI. Information transmitted as the FIC is not interleaved in the time region because a time delay is not allowed. The frequency interleaved beat stream is mapped to a differential quaternary phase shift keying (DQPSK) symbol and is converted to the OFDM symbol based on inverse fast fourier transform (IFFT). The OFDM symbol is converted to the RF signal and the RF signal is transmitted.

A mobile receiver for receiving the DMB service uses a battery having a limited power capacity as a power source. Therefore, power consumption of the mobile receiver must be reduced for using the DMB service with limited power capacity of the power source.

## SUMMARY OF THE INVENTION

Accordingly, the present invention is directed to a mobile broadcasting receiver for reducing power consumption and a method thereof that substantially obviates one or more problems due to limitations and disadvantages of the related art.

An object of the present invention is to provide a mobile broadcasting receiver for reducing power consumption and a method thereof by determining a time region of receiving a target broadcasting service in a transmitting frame and supplying electric power to a circuit processing analog signal only in the determined time region in the transmitting frame of Eureka-147 mobile broadcasting receiver.

Another object of the present invention is to provide a mobile broadcasting receiver for reducing power consumption and a method thereof by determining a time region of receiving a target broadcasting service in a transmitting frame and activating a circuit processing analog signal only in the determined time region.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a mobile broadcasting receiver receiving a transmitting frame including a synchronizing channel, a fast information channel (FIC) and a main service channel (MSC), the mobile broadcasting receiver includes: an analog processing unit for tuning radio frequency (RF) signals received through an antenna in order to extract a RF signal carrying a target broadcasting service among the received RF signals and converting the extracted RF signal to a digital signal; a decoder for orderly performing a fast fourier transform (FFT) and a differential decoding, and separating the FIC and the MSC by de-interleaving; and a controller for calculating OFDM symbols carrying service components of the target broadcasting service in the MSC by using information included in the decoded FIC, setting up a time region of receiving the service components of the target broadcasting service in the transmitting frame as a power-on region based on the calculated OFDM symbols and driving the analog processing unit only in the power-on region.

The analog processing unit may further include a power switch for receiving electric power; and the controller turns on the power switch in the power-on region in the transmitting frame for supplying the electric power to the analog processing unit and turns off the power switch in other time regions in the transmitting frame except for the power-on region for interrupting the electric power to the analog processing unit.

The analog processing unit may further include an activation terminal for controlling a standby mode, and the controller activates the analog processing unit by turning on the activation terminal in the power-on region in the transmitting frame and deactivates the analog processing unit by turning off the activation terminal in other time regions of the transmitting frame except for the power-on region.

The controller determines addresses of capacity units carrying the service components of the target broadcasting service in the MSC based on multiplex configuration information (MCI) of the FIC.

The controller sets up a time region of receiving a synchronization channel, the FIC, the calculated OFDM symbol including the capacity units carrying the target service components in the transmitting frame as the power-on region.

The controller further sets up a time region of receiving an OFDM symbol which is previously received than the calculated OFDM symbol in the transmitting frame as the power-on region.

The controller further sets up a predetermined region ahead of the time region of receiving the calculated OFDM symbols as a reserve region, and the reserve region is further included in the power-on region.

In another aspect of the present invention, there is provided a mobile broadcasting receiver receiving a transmitting frame including a synchronization channel, a fast information channel (FIC) and a main service channel (MSC), the mobile broadcasting receiver includes: a tuner for tuning radio frequency (RF) signals received through an antenna to extract a RF signal which a target broadcasting service is multiplexed; an analog-digital converter (ADC) for converting the extracted RF signal to a digital signal; a demodulator for performing a fast fourier transform (FFT) and a differential decoding, and separating the FIC and the MSC from the digital signal by de-interleaving; and a controller for calculating OFDM symbols carrying service components of the target broadcasting service in the MSC based on multiplex configuration information (MCI) in the FIC, setting up a time regions of receiving the service components of the target broadcasting service in the transmitting frame based on the calculated OFDM symbols as a power-on regions and turning on the tuner and the ADC only in the power-on region.

The tuner may further include a tuner power switch for receiving electric power; the ADC further includes an ADC power switch for receiving electric power; and the controller supplies the electric power to the tuner and the ADC by turning on the tuner power switch and the ADC power switch in the power-on region in the transmitting frame, and interrupts the electric power to the tuner and the ADC by turning off the tuner power switch and the ADC power switch in other time region in the transmitting frame except for the power-on region.

The tuner may further include a tuner activation terminal for controlling a standby mode of the tuner; the ADC further includes an ADC activation terminal for controlling a standby mode of the ADC; and the controller activates the tuner and the ADC by turning on the tuner activation terminal and the ADC activation terminal in the power-on region in the transmitting frame, and deactivates the tuner and the ADC by turning off the tuner activation terminal and the ADC activation terminal in other time region in the transmitting frame except for the power-on region.

The controller sets up a time region of receiving a synchronization channel, the FIC, the calculated OFDM symbol including the capacity units carrying the target service components and an OFDM symbol which is previously received than the calculated OFDM symbol in the transmitting frame as the power-on region.

The controller further sets up a predetermined region ahead of the time region of receiving the calculated OFDM symbols as a reserve region, and the reserve region is further included in the power-on region.

In further another aspect of the present invention, there is provided a method for reducing power consumption in a mobile broadcasting receiver including an analog processing unit for receiving a radio frequency (RF) signal of a transmitting frame having a synchronization channel, a fast information channel (FIC) and a main service channel (MSC) and converting the RF signal of the modulated transmitting frame to a digital signal, the method including the steps of: a) determining addresses of capacity units carrying service components of a target broadcasting service based on multiplex configuration information (MCI) in the FIC of the transmitting frame; b) calculating a transmitting order number of an OFDM symbol carrying the determined addresses of capacity units based on the determined addresses of capacity units; and c) setting up a time region of receiving a synchronization channel, the FIC, the calculated transmitting order of OFDM symbol and an OFDM symbol which is previously received than the calculated transmitting order of the OFDM symbol in the transmitting frame as the power-on region and driving the analog processing unit only in the power-on region.

It is to be understood that both the foregoing general description and the following detailed description of the present invention are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 shows broadcasting services provided based on the Eureka-147 system in accordance with a prior art;

FIG. 2 shows a structure of a transmitting frame in the Eureka-147 system in accordance with a prior art;

FIG. 3 is a diagram showing a frame structure of a MCS in a transmitting mode 1 which is standardized by Korea DMB standard in accordance with a prior art;

FIG. 4 is a frame structure of a transmitting mode 1 after OFDM modulation in accordance with a prior art;

FIG. 5 is a block diagram of a mobile broadcasting receiver in accordance with a preferred embodiment of the present invention;

FIG. 6 is a flowchart of a method for reducing power consumption in a mobile broadcasting receiver in accordance with a preferred embodiment of the present invention;

FIG. 7 is a view showing generation of control signal for controlling a power-on region in a DMB transmitting frame;

FIG. 8 is a diagram of a mobile broadcasting receiver for reducing power consumption by using a power switch to control a tuner and an ADC by; and

FIG. 9 is a diagram of a mobile broadcasting receiver for reducing power consumption by using an activation terminal to control a tuner and an ADC.

## DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

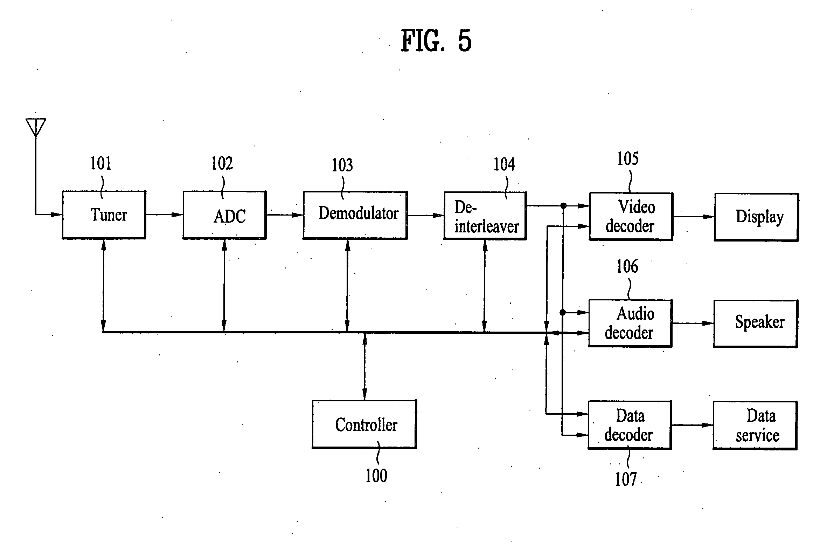

FIG. 5 is a block diagram of a mobile broadcasting receiver in accordance with a preferred embodiment of the present invention. The mobile broadcasting receiver receives a DMB service. That is, a plurality of broadcasting services is multiplexed to an ensemble and the ensemble is modulated for transmitting the ensemble to the mobile broadcasting receiver. The mobile broadcasting receiver receives the modulated ensemble and demodulates the modulated ensemble for obtaining the ensemble. After obtaining the ensemble, the mobile broadcasting receiver extracts a target broadcasting service among a plurality of broadcasting services multiplexed in the ensemble. After extracting the target broadcasting service, the mobile broadcasting receiver recovers service components of the target broadcasting service. The target broadcasting service is a broadcasting service among a plurality of broadcasting services included in the ensemble which is desired by a user.

As shown in FIG. 5, the mobile broadcasting receiver includes a controller 100, a tuner 101, an analog/digital converter (ADC) 102, a demodulator 103, a de-interleaver 104, a video decoder 105, an audio decoder 106 and a data decoder 107. The tuner 101 tunes a received signal for extracting a RF signal of the target broadcasting service among RF signals received through an antenna and converts the extracted RF signal to an intermediate frequency (IF) signal. The analog/digital converter (ADC) 102 receives the IF signal from the tuner 101 and digitalizes the IF signal. The demodulator 103 receives the digital signal and performs a Fast Fourier Transform (FFT) and a differential decoding. The de-interleaver 104 receives the decoded signal and performs a de-interleaving in a frequency domain. After performing the de-interleaving, the de-interleaver 104 divides the de-interleaved signal to a fast information channel FIC which is a control channel and a main service channel MSC which is a data channel. The MSC is de-interleaved in a time domain for dividing the broadcasting service to a video service component, an audio service component and a data service component. The video service component is transmitted to the video decoder 105 for decoding. The audio service component is transmitted to the audio decoder 106 and the audio decoder 106 decodes the audio service component. The data service component is transmitted to the data service decoder 107 and the data service decoder 107 decodes the data service component. Simultaneously, the FIC is transmitted to the controller 100 and the controller 100 decodes the FIC. The controller 100 provides a user interface to a user for selecting a predetermined function and decodes information in the FIC for controlling general operations of the mobile broadcasting receiver which is a DMB receiver.

As shown in FIG. 5, the mobile broadcasting receiver is suitable for receiving the broadcasting service during traveling. Specially, the receiving function of the mobile broadcasting receiver can be implemented in the mobile phone or a personal data assistance (PDA) as an addition function and a user can receive the broadcasting service wherever the user wants by using the receiving function implemented mobile phone or PDA.

Functional blocks of the mobile broadcasting receiver use electric power for performing corresponding operations. An average power consumption of the mobile broadcasting receiver is corresponding to a square of clock frequency and voltage supplied to functional blocks. Also, an amount of energy supplied from a power source is correspondent to an operating time of the mobile broadcasting receiver and the average power consumption in a unit time after predetermined time is elapsed.

That is, the power consumption of the mobile broadcasting receiver may be saved by reducing the average power consumption or the operation time of functional blocks. The average power consumption may reduce by operating the functional blocks of the mobile broadcasting receiver in lower clock frequency or in low voltage. Also, if functional blocks are operated only while corresponding functions are required to be performed, the power consumption of the mobile broadcasting receiver may be saved.

As an example of a mobile phone controlling the clock for reducing the power consumption, amount of operating software is estimated and a frequency of the clock is lowered if the estimated amount is lower than a predetermined value. Also, as an example of a mobile phone controlling the operating time for reducing the power consumption, a display of the mobile phone is turned off after a predetermined time is elapsed.

In case of the mobile broadcasting receiver, the power consumption may be reduced by interrupting operations of the tuner 101, the ADC 102, the demodulator 103, the de-interleaver 104 and one of video, audio, and data decoders 105 to 107 or by stopping supplying electric power the tuner 101, the ADC 102, the demodulator 103, the de-interleaver 104 and one of video, audio, and data decoders 105 to 107 when the user does not selects the function of receiving the DMB service.

However, the tuner 101 and the ADC 102 are always turned on while the electric power is supplied to the mobile broadcasting receiver when the user selects the DMB service function. That is, an electric current always flows in the tuner 101 and the ADC 102 because they are analog circuits which process an analog signal. Therefore, the tuner 101 and the ADC 102 consume comparatively large amount of electric power. In contrary, a digital circuit processing a digital signal consumes less amount of the electric power since the electric power does not flow in the digital circuit in on/off states. That is, the electric power flows in the digital circuit in a state transform region. Therefore, the digital circuit consumes comparatively less amount of electric power comparing to the analog circuit.

Accordingly, the power consumption of the mobile broadcasting receiver is reduced in the present invention by extracting time regions of receiving the target broadcasting service in a transmitting frame of the Eureka-147 mobile broadcasting receiver and supplying the electric power to the analog circuits only during the extracted time regions, or by activating the analog circuits only during the extracted time regions.

For extracting the time regions, the mobile broadcasting receiver of the present invention determines a location of service components of the target broadcasting service in the main service channel MSC of the transmitting frame based on multiplex configuration information (MCI) in the fast information channel FIC of the transmitting frame. The MCI includes information about locations of the service components in the MSC. That is, the FIC includes information about capacity units CU of each common interface frame CIF carrying the service components of the target broadcasting service. As described above, the MCI provides information about broadcasting services multiplexed in the ensemble, service components included in the broadcasting services and locations of the service components in the transmitting frame.

The service components are loaded in corresponding capacity units CUs of each CIF in the MSC and transmitted at a transmitting side. Therefore, if the location of the CUs carrying the service components of the target broadcasting service is known, the service components of the target broadcasting service may be accurately extracted at a receiving side.

The capacity unit CU is 64 bits and 48 CUs are modulated to single OFDM symbol in the transmitting side. Accordingly, an OFDM symbol carrying the service components can be selected among a plurality of received OFDM symbols at the receiving side by analyzing an address of a CU carrying service components of a target broadcasting service.

For example, if $N^{th}$ CU of each CIF carries a service component in the transmitting mode 1, a receiving order number M of the OFDM symbol carrying the service components is calculated by using following Eq. 1.

$$M = \text{rounding the decimal number of } \frac{(64xN)}{3072} \text{ to the nearest integer number} \qquad \text{Eq. 1}$$

In Eq. 1, 64 represents the number of bits in one CU and 3072 represent the number of bits in single OFDM symbol.

As described above, the OFDM symbol having a CU carrying the service components is determined among a plurality of the received OFDM symbols by extracting addresses of CUs carrying the service component in each CIF based on the MCI and applying Eq. 1 with extracted addresses of CUs.

Based on the determined OFDM symbol, the present invention determines a time region for activating the analog circuit. That is, the time region is regions of receiving the service components of the target broadcasting service in the transmitting frame, which is occupied by the determined OFDM symbols carrying the service components. The power consumption of the mobile broadcasting receiver is reduced by operating the analog circuit only in the time region of receiving the service components.

In a preferred embodiment of the present invention, the tuner 101 and the ADC 102 among analog circuits are controlled for reducing the power consumption. However, the present invention is not limited to control the tuner 101 and the ADC 102 because any of the analog circuits in the mobile broadcasting receiver can be controlled.

The mobile broadcasting receiver requires the fast information channel FIC in the transmitting frame for receiving the target broadcasting service in the mobile broadcasting receiver as mentioned above because the FIC includes the synchronization channel and the MCI. Therefore, the tuner 101 and the ADC 102 must be operated in a time region of receiving the synchronization channel and the fast information channel in the transmitting frame.

Furthermore, the OFDM symbol is generated by the differential coding in the transmitting side. Therefore, the mobile broadcasting receiver requires one OFDM symbol previously transmitted than currently received OFDM symbol for differential decoding. For example, if the number of OFDM symbols including the service components of the target broadcasting service is one, it requires an OFDM symbol previously transmitted than the OFDM symbol having the service component. If there is a plurality of consecutive OFDM symbols including the service components, it requires an OFDM symbol previously transmitted than a first OFDM symbol of the consecutive OFDM symbols for differential decoding. Hereinafter, the OFDM symbol required for the differential decoding is called as a reserve OFDM symbol.

Accordingly, the tuner 101 and the ADC 102 must be operated in time regions of receiving the reserve OFDM symbol of the transmitting frame.

As mentioned above, the power consumption of the mobile broadcasting receiver is reduced in the present invention by operating the tuner 101 and the ADC 102 only in time regions of receiving the synchronization channel, the fast information channel FIC, the OFDM symbols carrying the target service components and the reserve OFDM symbol.

Furthermore, the mobile broadcasting receiver may turn on the tuner 101 and the ADC 102 in a time region started by receiving an OFDM symbol which is previously received several OFDM symbols ahead of the OFDM symbol carrying the service component the reserve OFDM symbol and ended by the reserve OFDM symbol for stabilizing receiving performance. The time region for stabilizing is called as a reserved region hereinafter.

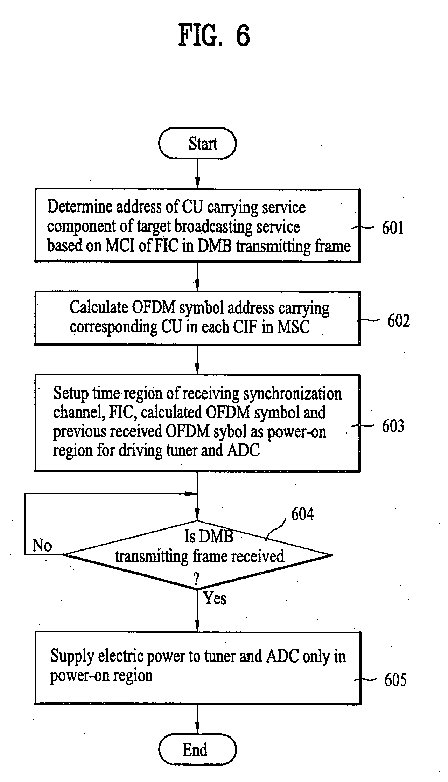

FIG. 6 is a flowchart of a method for reducing power consumption in a mobile broadcasting receiver in accordance with a preferred embodiment of the present invention. As shown in FIG. 6, addresses of CUs carrying the service components of the target broadcasting service in the main service channel MSC are determined by analyzing the MCI in the FIC at step 601. That is, the mobile broadcasting receiver determines which CUs of each CIF in the MSC carry the target service components.

After determining the addresses of the CUs at step 601, the mobile broadcasting receiver determines OFDM symbols carrying the determined CUs based on Eq. 1 at step 602. After then, the mobile broadcasting receiver sets the time region of receiving the synchronization channel, the FIC, the calculated OFDM symbols and the reserve OFDM symbol as a power-on region for operating the tuner 101 and the ADC 102 at step 603.

For stabilizing the receiving operation, the reserve region may be included as the power-on region. The reserve region is a time region started by receiving an OFDM symbol which is received several OFDM symbols previous of the OFDM symbol carrying the service component the reserve OFDM symbol and ended by the reserve OFDM symbol for stabilizing receiving performance as mentioned above.

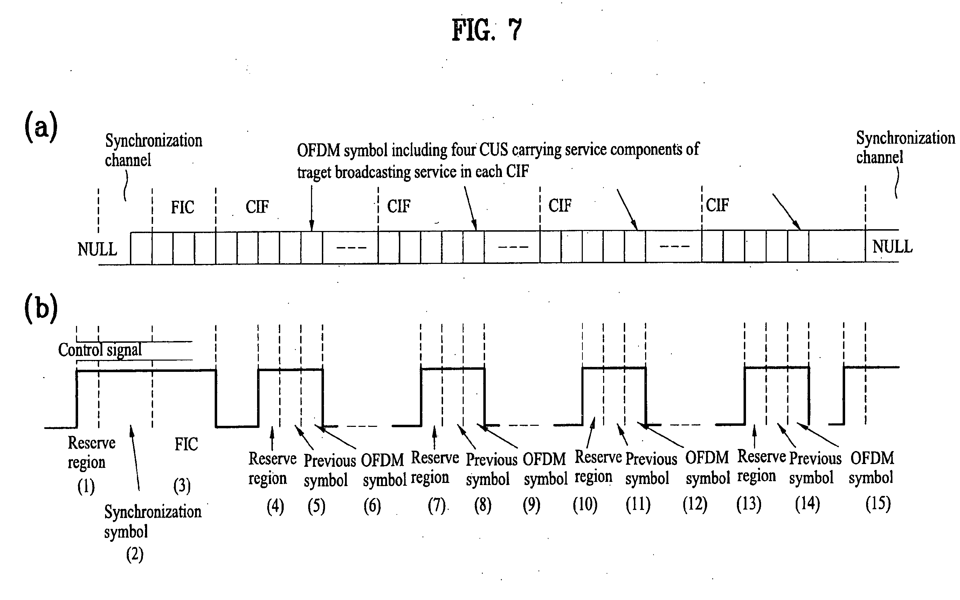

FIG. 7 is a view showing generation of a control signal of a tuner and an ADC in accordance with a preferred embodiment of the present invention. That is, FIG. 7 shows generation of the control signal when a fifth CU of each CIF of the MSC carry the service components of the target broadcasting service in transmitting mode 1.

As shown in FIG. 7, a region (1) represents the reserve region ahead the synchronization channel for stabilizing the receiving operation. A region (2) represents the power-on region for receiving the synchronization channel of DMB transmitting frame. A region (3) represents the power-on region for receiving the FIC of DMB transmitting frame. A region (4) represents the reserve region for stabilizing the receiving operation and a region (5) represents the power-on region of receiving the reserve OFDM symbol for the differential decoding. A region (6) is the power-on region of receiving the OFDM symbols carrying the CUs of the service components of the target broadcasting service.

The regions (4), (5), (6) are repeatedly shown in each of the CIFs in the transmitting frame such as regions (7), (8), (9), regions (10), (11), (12) and regions (13), (14), (15) in FIG. 7. As mentioned above, the reserve regions (1), (4), (7), (10), (13) may be set based on characteristics of the tuner 101 and the ADC 102.

In the preferred embodiment of the present invention, the tuner 101 and the ADC 102 are activated when the control signal becomes high as shown in (b) of FIG. 7. That is, the tuner 101 and the ADC 102 are activated in the power-on region for performing necessary operations for receiving broadcasting service. In contrary, when the operating control signal becomes low, the tuner 101 and the ADC 102 are inactivated for reducing power consumption of the mobile broadcasting receiver.

There may be two methods for controlling operating of the tuner 101 and the ADC 102. That is, power source is controlled for controlling the tuner 101 and the ADC 102. Also, the tuner 101 and the ADC 102 may be controlled by controlling an activation terminal for activating the tuner 101 and the ADC 102 if the mobile broadcasting receiver is set as a standby mode which is a state of the mobile broadcasting receiver for waiting a predetermined event.

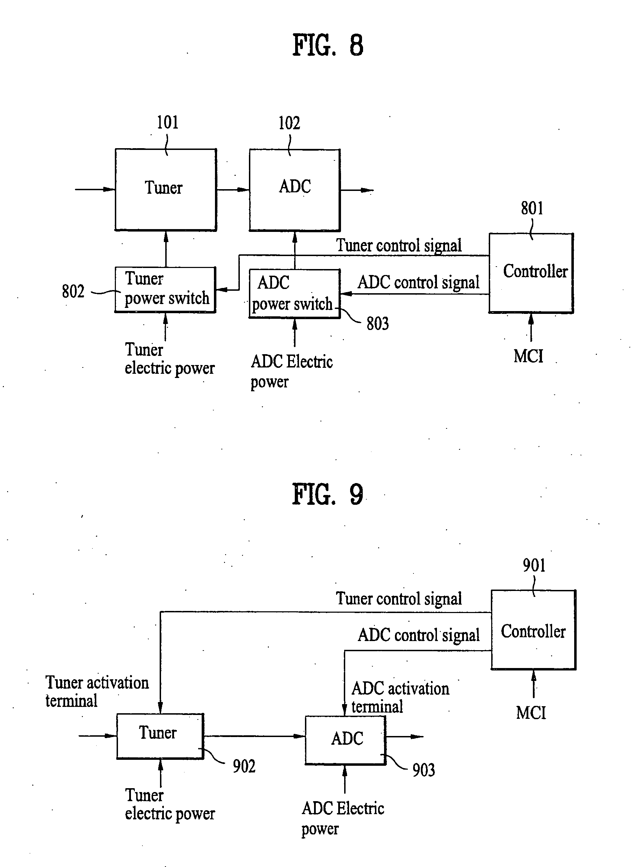

FIG. 8 is a diagram of a mobile broadcasting receiver for reducing power consumption by using a power control switch to control a tuner and an ADC. That is, the electric power is supplied to the tuner 101 and the ADC 102 by turning on a power switch only in the power-on regions in DMB transmitting frame and the electric power is interrupted by turning off the power switch in other time region of the DMB transmitting frame.

For controlling the tuner 101 and the ADC 102, the power-on regions are determined as mentioned above and the mobile broadcasting receiver generated the control signal which becomes high only in the power-on regions. The control signal is outputted to a tuner power switch 802 and an ADC power switch 803.

The tuner power switch 802 becomes turned on by a tuner control signal in the power-on regions in DMB transmitting frame and the electric power from a power supplier (not shown) is supplied to the tuner 101. Also, the ADC power switch 803 is turned on by an ADC control signal in the power-on regions and the electric power from the power supplier is supplied to the ADC 102. In contrary, the tuner power switch 802 and the ADC power switch 803 are turned off by the tuner control signal and the ADC control signal in other regions of the transmitting frame beside of the power-on regions. In this case, the electric power is not supplied to the tuner 101 and the ADC 102.

Meanwhile, the mobile broadcasting receiver may include a standby mode for minimizing power consumption. A tuner activation terminal and an ADC activation terminal may be included in the mobile broadcasting receiver for inactivating the tuner 101 and the ADC 102 when the mobile broadcasting receiver is in the standby mode.

FIG. 9 is a diagram of a mobile broadcasting receiver for reducing power consumption by using a tuner activation terminal and an ADC activation terminal to control a tuner and an ADC. The tuner 101 and the ADC 102 are activated by turning on the tuner and ADC activation terminals only in the power-on regions in the DMB transmitting frame. The tuner 101 and the ADC 102 are inactivated by turning off the tuner and the ADC activation terminal in other regions in the DMB transmitting frame for maintaining the standby mode of the mobile broadcasting receiver.

The controller 801 determines the power-on regions for receiving the service components of the target broadcasting service in the DMB transmitting frame. The controller 801 generates a tuner control signal and an ADC control signal which become high only in the power-on regions and outputs the generated control signals to the tuner 101 and the ADC 102.

The activation terminals for the tuner 101 and the ADC 102 are turned on in the working regions in the DMB transmitting region by the tuner control signal and the ADC control signal. The tuner 101 and the ADC 102 are released from the standby mode and the tuner 101 and the ADC 102 perform corresponding functions. The activation terminals of the tuner 101 and the ADC 102 are turned off in other regions in the DMB transmitting frame by the tuner control signal and the ADC control signal. The tuner 101 and the ADC 102 becomes in the standby mode. That is, the tuner 101 and the ADC 102 are in a state waiting a predetermined event. In other words, electric power is not supplied to the tuner 101 and the ADC 102 or minimum electric power is supplied to the tuner 101 and the ADC 102.

In case of using the activation terminal as shown in FIG. 9, the tuner 101 and the ADC 102 rapidly performs functions when the activation terminal turns on the tuner 101 and the ADC 102. Therefore, the reserve region may be reduced by controlling the tuner 101 and the ADC 102 based on the activation terminals.

As described above, the present invention is explained by using the DMB receiver as an embodiment example. However, the present invention may be embodied as a DAB receiver.

As mentioned above, the OFDM symbols carrying the CUs having service components of the target broadcasting service are calculated and the power-on regions are determined based on the calculated OFDM symbols. The analog circuits such as the tuner and the ADC are activated only in the power-on regions in the Eureka-147 mobile broadcasting receiver and a method thereof in accordance with the present invention. Therefore, power consumption of the mobile broadcasting receiver such as the DMB receiver is reduced by activating the analog circuits only in the power-on regions.

It will be apparent to those skilled in the art that various modifications and variations can be made in the present invention. Thus, it is intended that the present invention covers the modifications and variations of this invention provided they come within the scope of the appended claims and their equivalents.

**Claims**

1.  A mobile broadcasting receiver receiving a transmitting frame including a synchronizing channel, a fast information channel (FIC) and a main service channel (MSC), the mobile broadcasting receiver comprising:

    an analog processing unit for tuning radio frequency (RF) signals received through an antenna in order to extract a RF signal carrying a target broadcasting service among the received RF signals and converting the extracted RF signal to a digital signal;
    a decoder for orderly performing a fast fourier transform (FFT) and a differential decoding, and separating the FIC and the MSC by de-interleaving; and
    a controller for calculating OFDM symbols carrying service components of the target broadcasting service in the MSC by using information included in the decoded FIC, setting up a time region of receiving the service components of the target broadcasting service in the transmitting frame as a power-on region based on the calculated OFDM symbols and driving the analog processing unit only in the power-on region.

2.  The mobile broadcasting receiver of claim 1, wherein the analog processing unit further includes a power switch for receiving electric power; and
    the controller turns on the power switch in the power-on region in the transmitting frame for supplying the electric power to the analog processing unit and turns off the power switch in other time regions in the transmitting frame except for the power-on region for interrupting the electric power to the analog processing unit.

3.  The mobile broadcasting receiver of claim 1, wherein the analog processing unit further includes an activation terminal for controlling a standby mode, and
    the controller activates the analog processing unit by turning on the activation terminal in the power-on region in the transmitting frame and deactivates the analog processing unit by turning off the activation terminal in other time regions of the transmitting frame except for the power-on region.

4.  The mobile broadcasting receiver of claim 1, wherein the controller determines addresses of capacity units carrying the service components of the target broadcasting service in the MSC based on multiplex configuration information (MCI) of the FIC.

5.  The mobile broadcasting receiver of claim 4, wherein the controller calculates the OFDM symbols carrying the service components of the target broadcasting service based on an equation of M = rounding the decimal number of $\frac{(64 \times N)}{3072}$ to the nearest integer number and the determined addresses of the capacity units, where N is an address of capacity unit, M is a transmitting order number of an OFDM symbol carrying the N capacity unit, 64 represents the number of bits in the capacity unit and 3074 represents the number of bits in single OFDM symbol.

6.  The mobile broadcasting receiver of claim 1, wherein the controller sets up a time region of receiving a synchronization channel, the FIC, the calculated OFDM symbol including the capacity units carrying the target service components in the transmitting frame as the power-on region.

7.  The mobile broadcasting receiver of claim 6, wherein the controller further sets up a time region of receiving an OFDM symbol which is previously received than the calculated OFDM symbol in the transmitting frame as the power-on region.

8.  The mobile broadcasting receiver of claim 6, wherein the controller further sets up a predetermined region ahead of the time region of receiving the calculated OFDM symbols as a reserve region, and the reserve region is further included in the power-on region.

9.  A mobile broadcasting receiver receiving a transmitting frame including a synchronization channel, a fast information channel (FIC) and a main service channel (MSC), the mobile broadcasting receiver comprising:

    a tuner for tuning radio frequency (RF) signals received through an antenna to extract a RF signal which a target broadcasting service is multiplexed;
    an analog-digital converter (ADC) for converting the extracted RF signal to a digital signal;

a demodulator for performing a fast fourier transform (FFT) and a differential decoding, and separating the FIC and the MSC from the digital signal by de-interleaving; and

a controller for calculating OFDM symbols carrying service components of the target broadcasting service in the MSC based on multiplex configuration information (MCI) in the FIC, setting up a time regions of receiving the service components of the target broadcasting service in the transmitting frame based on the calculated OFDM symbols as a power-on regions and turning on the tuner and the ADC only in the power-on region.

10. The mobile broadcasting receiver of claim 9, wherein the tuner further includes a tuner power switch for receiving electric power;

wherein the ADC further includes an ADC power switch for receiving electric power; and

wherein the controller supplies the electric power to the tuner and the ADC by turning on the tuner power switch and the ADC power switch in the power-on region in the transmitting frame, and interrupts the electric power to the tuner and the ADC by turning off the tuner power switch and the ADC power switch in other time region in the transmitting frame except for the power-on region.

11. The mobile broadcasting receiver of claim 9, wherein the tuner further includes a tuner activation terminal for controlling a standby mode of the tuner;

wherein the ADC further includes an ADC activation terminal for controlling a standby mode of the ADC; and

wherein the controller activates the tuner and the ADC by turning on the tuner activation terminal and the ADC activation terminal in the power-on region in the transmitting frame, and deactivates the tuner and the ADC by turning off the tuner activation terminal and the ADC activation terminal in other time region in the transmitting frame except for the power-on region.

12. The mobile broadcasting receiver of claim 9, wherein the controller determines addresses of capacity units carrying the service components of the target broadcasting service in the MSC based on multiplex configuration information (MCI) in the FIC of the transmitting frame, and calculating a transmitting order number of the OFDM symbol carrying the determined addresses of capacity units based on an equation of M = rounding the decimal number of $\frac{(64 \times N)}{3072}$ to the nearest integer number and the determined addresses of the capacity units, where N is an address of capacity unit, M is a transmitting order number of an OFDM symbol carrying the N capacity unit, 64 represents the number of bits in the capacity unit and 3074 represents the number of bits in single OFDM symbol.

13. The mobile broadcasting receiver of claim 12, the controller sets up a time region of receiving a synchronization channel, the FIC, the calculated OFDM symbol including the capacity units carrying the target service components and an OFDM symbol which is previously received than the calculated OFDM symbol in the transmitting frame as the power-on region.

14. The mobile broadcasting receiver of claim 13, wherein the controller further sets up a predetermined region ahead of the time region of receiving the calculated OFDM symbols as a reserve region, and the reserve region is further included in the power-on region.

15. A method for reducing power consumption in a mobile broadcasting receiver including an analog processing unit for receiving a radio frequency (RF) signal of a transmitting frame having a synchronization channel, a fast information channel (FIC) and a main service channel (MSC) and converting the RF signal of the modulated transmitting frame to a digital signal, the method comprising the steps of:

a) determining addresses of capacity units carrying service components of a target broadcasting service based on multiplex configuration information (MCI) in the FIC of the transmitting frame;
b) calculating a transmitting order number of an OFDM symbol carrying the determined addresses of capacity units based on the determined addresses of capacity units; and
c) setting up a time region of receiving a synchronization channel, the FIC, the calculated transmitting order of OFDM symbol and an OFDM symbol which is previously received than the calculated transmitting order of the OFDM symbol in the transmitting frame as the power-on region and driving the analog processing unit only in the power-on region.

16. The method of claim 15, wherein the transmitting order number of the OFDM symbol including the determined addresses of the capacity units is calculated by using an equation of M = rounding the decimal number of $\frac{(64 \times N)}{3072}$ to the nearest integer number and the determined addresses of the capacity units, where N is an address of capacity unit, M is a transmitting order number of an OFDM symbol carrying the N capacity unit, 64 represents the number of bits in the capacity unit and 3074 represents the number of bits in single OFDM symbol.

17. The method of claim 15, wherein in the step c), electric power is supplied to the analog processing unit only in the power-on region and electric power is interrupted in other time region of the transmitting frame except for the power-on region.

18. The method of claim 15, wherein in the step c), the analog processing unit is activated only in the power-on region and the analog processing unit is maintained in a standby mode in other time region of the transmitting frame except for the power-on region.

19. The method of claim 15, wherein the step c) includes the steps of:

c-1) determining whether the analog processing unit is in the standby mode;
c-2) supplying electric power to the analog processing unit only in the power-on region if the analog processing unit is not in the standby mode; and
c-3) activating the analog process unit only in the power-on region if the analog process unit is in the standby mode.

20. The method of claim 15, wherein in the step c), a predetermined region ahead of the time region of receiving the calculated OFDM symbols is setup as a reserve region, and the reserve region is further included in the power-on region.

# FIG. 1
# Prior Art

```
                        ┌──────────┐
                        │ Ensemble │
                        └────┬─────┘
                  ┌──────────┴───────────┐
         ┌────────────────┐      ┌────────────────┐
Service  │     Korea      │      │     Seoul      │
         │  broadcasting  │      │  broadcasting  │
         └───────┬────────┘      └───────┬────────┘
         ┌───────┼────────┐              │
    ┌─────────┐ ┌─────────┐ ┌─────────────┐ ┌─────────┐
Service │ Video 1 │ │ Audio 1 │ │   Service   │ │ Audio 2 │
component└─────────┘ └─────────┘ │ information 1│ └─────────┘
                                 └─────────────┘
```

# FIG. 2
# Prior Art

| Transmitting frame | | |
|---|---|---|
| Synchronization channel | FIC | MSC |

# FIG. 3
# Prior Art

| | | | |
|---|---|---|---|
| **(a)** | Synchronization channel | FIC | MSC |

| | | | | |
|---|---|---|---|---|
| **(b)** | CIF | CIF | CIF | CIF |

| | | | | | | |
|---|---|---|---|---|---|---|
| **(c)** | CU0 | CU1 | CU2 | CU3 | - - - - - - - - - | CU863 |

# FIG. 4
# Prior Art

Synchronization channel — FIC — MSC

| NULL | PRS | OFDM symbol | OFDM symbol | OFDM symbol | OFDM symbol | - - - - - - - - | OFDM symbol |
|---|---|---|---|---|---|---|---|

# FIG. 5

EP 1 592 155 A1

# FIG. 6

Start

Determine address of CU carrying service component of target broadcasting service based on MCI of FIC in DMB transmitting frame — 601

Calculate OFDM symbol address carrying corresponding CU in each CIF in MSC — 602

Setup time region of receiving synchronization channel, FIC, calculated OFDM symbol and previous received OFDM sybol as power-on region for driving tuner and ADC — 603

604

No — Is DMB transmitting frame received ?

Yes

Supply electric power to tuner and ADC only in power-on region — 605

End

# FIG. 7

**(a)**

Synchronization channel

OFDM symbol including four CUS carrying service components of traget broadcasting service in each CIF

Synchronization channel

| NULL | | | | | | FIC | | | CIF | | | | --- | | | | | | CIF | | | | --- | | | | | | CIF | | | | --- | | | | | | CIF | | | | | | | NULL |

**(b)**

Control signal

Reserve region (1)

Synchronization symbol (2)

FIC (3)

Reserve region (4)

Previous symbol (5)

OFDM symbol (6)

Reserve region (7)

Previous symbol (8)

OFDM symbol (9)

Reserve region (10)

Previous symbol (11)

OFDM symbol (12)

Reserve region (13)

Previous symbol (14)

OFDM symbol (15)

EP 1 592 155 A1

# FIG. 8

# FIG. 9

**European Patent Office**

**EUROPEAN SEARCH REPORT**

Application Number

EP 05 00 5800

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 071 221 A (MATSUSHITA ELECTRIC INDUSTRIAL CO., LTD) 24 January 2001 (2001-01-24) * the whole document * ----- | 1-20 | H04H1/00 H04B1/16 |
| X | EP 0 959 574 A (SONY CORPORATION) 24 November 1999 (1999-11-24) * the whole document * ----- | 1-20 | |
| A | WO 01/50647 A (TERACOM AB; OSSFELDT, JAN; BOHM, KRISTINA) 12 July 2001 (2001-07-12) * the whole document * ----- | 1-20 | |

| TECHNICAL FIELDS SEARCHED (Int.Cl.7) |
|---|
| H04H H04B |

The present search report has been drawn up for all claims

| Place of search | Date of completion of the search | Examiner |
|---|---|---|
| Munich | 2 September 2005 | Horn, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                    EP 05 00 5800

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2005

| Patent document cited in search report | | Publication date | Patent family member(s) | | Publication date |
|---|---|---|---|---|---|
| EP 1071221 | A | 24-01-2001 | EP | 1071221 A1 | 24-01-2001 |
| | | | CA | 2314201 A1 | 23-01-2001 |
| | | | JP | 2001069023 A | 16-03-2001 |
| EP 0959574 | A | 24-11-1999 | JP | 11331002 A | 30-11-1999 |
| | | | EP | 0959574 A2 | 24-11-1999 |
| | | | US | 6614855 B1 | 02-09-2003 |
| WO 0150647 | A | 12-07-2001 | AU | 1566401 A | 16-07-2001 |
| | | | AU | 7820400 A | 16-07-2001 |
| | | | EP | 1245089 A1 | 02-10-2002 |
| | | | EP | 1247363 A1 | 09-10-2002 |
| | | | WO | 0150647 A1 | 12-07-2001 |
| | | | WO | 0150649 A1 | 12-07-2001 |

EPO FORM P0459

For more details about this annex : see Official Journal of the European Patent Office, No. 12/82